# EUROPÄISCHE PATENTANMELDUNG

(11) **EP 4 806 674 A1**
(43) Veröffentlichungstag der Anmeldung: **16.09.2026**
(21) Anmeldenummer: 25163302.0
(22) Anmeldetag: 12.03.2025
(51) Int. Cl.: B60C 29/00, B60C 29/04

(54) **VENTILSCHAFT FÜR EINEN AUFBLASBAREN HOHLKÖRPER**

(71) Anmelder: Isovolta AG, 2355 Wiener Neudorf (AT)
(72) Erfinder: Zechner, Christian, 8962 Gröbming (AT); Pertl, Peter, 8042 Graz (AT)
(74) Vertreter: Schwarz & Partner Patentanwälte GmbH

(57) **Zusammenfassung**

Die Erfindung betrifft einen Ventilschaft (1) für einen aufblasbaren Hohlkörper, insbesondere einen fluidführenden Schlauch wie einen Fahrradschlauch, wobei der Ventilschaft (1) eine durchgehende Innenausnehmung (6), die von einem ersten Ende des Ventilschafts (1) bis zu einem zweiten Ende des Ventilschafts (1) verläuft, wobei der Ventilschaft (1) einen im Wesentlichen zylindrischen Körper (3) umfasst, der am ersten Ende eine endseitige Ventilanbindung, insbesondere ein Gewinde, aufweist, wobei der Ventilschaft (1) am zweiten Ende einen Teller (5) aufweist, wobei sich ein Funktionsabschnitt (4) zwischen dem Ventilkörper (3) und dem Teller (5) befindet, wobei der Funktionsabschnitt (4) an jeder Stelle des Funktionsabschnitts (4) einen geringeren Durchmesser als der Teller (5) und der Ventilkörper (3) aufweist, wobei der Funktionsabschnitt (4) eine um den Umfang des Funktionsabschnitts (4) verlaufende Nut (9) aufweist.

## Beschreibung

Die vorliegende Erfindung betrifft einen Ventilschaft zur Verwendung in aufblasbaren Hohlkörpern, insbesondere in Fahrradschläuchen oder anderen Luftreifen. Der Ventilschaft dient zur Aufnahme eines Ventileinsatzes, über den das Ein- und Ablassen von Luft gesteuert wird.

Der Ventilschaft dient als Verbindungselement zwischen dem Schlauch und einem Ventileinsatz, über den das Ein- und Ablassen von Luft gesteuert wird. Eine zuverlässige und dichte Verbindung zwischen dem Ventilschaft und dem Schlauch ist entscheidend für die Funktionalität und Lebensdauer des Schlauchs.

Üblicherweise werden Ventilschäfte fest mit dem Schlauchmaterial verbunden, um eine luftdichte und mechanisch belastbare Verbindung zu gewährleisten. Eine mögliche Methode besteht darin, einen sogenannten Ventilfuß aus Kunststoff am Ventilschaft vorzusehen und diesen in eine Öffnung des Schlauchs einzusetzen und z.B. mittels Vulkanisation mit dem Schlauchmaterial zu verbinden. Dabei wird der Gummi des Schlauchs unter Hitze und Druck mit dem Ventilfuß vernetzt, wodurch eine dauerhafte Verbindung entsteht. Alternativ werden auch mechanische Befestigungsmethoden wie Klemmverbindungen, Pressverbindungen oder Verklebungen eingesetzt, insbesondere bei Ventilsystemen für Tubeless-Reifen oder Hochdruckanwendungen. In der genannten Variante mit Ventilfuß besteht jedoch die zusätzliche Herausforderung, dass der Ventilfuß dicht mit dem Ventilschaft verbunden werden muss, was weitere Verbindungstechniken erfordert.

Bei anderen Ausführungen ist die Abdichtung zwischen Ventilschaft und Schlauch oft durch eine zusätzliche Dichtscheibe oder eine aufvulkanisierte Verstärkungsschicht realisiert. Trotz dieser Maßnahmen können sich bei hohen Belastungen oder Vibrationen Undichtigkeiten oder Materialermüdungen im Bereich der Verbindung zwischen Schlauch und Ventilschaft bilden. Aus dem Stand der Technik sind ferner Ventilschäfte bekannt, die eine separate Dichtmanschette oder eine selbstklemmende Basis aufweisen, um die Verbindung zum Schlauch ohne Vulkanisation herzustellen. Diese Lösungen erfordern jedoch oft zusätzliche Montageschritte oder Dichtungselemente, die die Fertigungskosten erhöhen und potenzielle Schwachstellen in der Verbindung erzeugen.

Es ist das Ziel der vorliegenden Erfindung, einen Ventilschaft zu schaffen, der über möglichst wenig Einzelteile verfügt und trotzdem eine möglichste dichte Anbindung an den Schlauch erzielt.

Diese Aufgabe wird gelöst durch einen Ventilschaft für einen aufblasbaren Hohlkörper, insbesondere einen fluidführenden Schlauch wie einen Fahrradschlauch, wobei der Ventilschaft eine durchgehende Innenausnehmung aufweist, die von einem ersten Ende des Ventilschafts bis zu einem zweiten Ende des Ventilschafts verläuft, wobei der Ventilschaft einen im Wesentlichen zylindrischen Körper umfasst, der am ersten Ende eine endseitige Ventilanbindung, insbesondere ein Gewinde, aufweist, wobei der Ventilschaft am zweiten Ende einen Teller aufweist, wobei sich ein Funktionsabschnitt zwischen dem Ventilkörper und dem Teller befindet, wobei der Funktionsabschnitt an jeder Stelle des Funktionsabschnitts einen geringeren Durchmesser als der Teller und der Ventilkörper aufweist, wobei der Funktionsabschnitt eine um den Umfang des Funktionsabschnitts verlaufende Nut aufweist.

Die Erfindung ermöglicht einen Ventilschaft, der eine besonders dichte Verbindung für einen Ventilfuß bereitstellen kann, ohne dass der Ventilfuß mit weiteren Hilfsmitteln am Ventilschaft abgedichtet wird. Insbesondere ist es nicht notwendig, die Verbindung zwischen dem Ventilschaft und dem Ventilfuß mit Schrumpfschläuchen oder dergleichen zusätzlich abzudichten. Auch müssen keine zusätzlichen Schellen zur Abdichtung bereitgestellt werden.

Überraschenderweise konnte somit eine Lösung gefunden werden, um eine dichte Verbindung zwischen Ventilschaft und Ventilfuß zu erzielen, die alleine durch die spezielle Ausgestaltung des Ventilschafts zurückzuführen ist. Konkret ermöglicht die erfindungsgemäße Nut, dass der Ventilfuß eine Dichtlippe formen kann, wenn dieser um den Funktionsabschnitt gespritzt wird. Die in der Nut befindliche Dichtlippe ermöglicht in der Folge eine Abdichtung, die einstückig am Ventilschaft bzw. am Ventilfuß ausgebildet ist, sodass keine weiteren Hilfsmittel zur Abdichtung eingesetzt werden müssen.

Bereits eine Nut mit einer geringen Tiefe ermöglicht eine Verbesserung der Dichtung, wobei jedoch bevorzugt ist, dass die Nut eine Tiefe von zumindest 0,2 mm, bevorzugt von zumindest 0,5 mm und besonders bevorzugt von zumindest 0,8 mm aufweist. Es wird weiters hervorgehoben, dass sich in Versuchen herausgestellt hat, dass eine Wechselwirkung der Verformbarkeit bzw. der Erweichungstemperatur des Kunststoffs des Ventilfußes und der Tiefe der Nut besteht. Für besonders unverformbare Kunststoffe bzw. Kunststoffe mit einer hohen Erweichungstemperatur ist bereits bei einer geringen Tiefe der Nut eine optimale Dichtung gegeben. Für leichter verformbare Kunststoffe bzw. Kunststoffe mit einer niedrigeren Erweichungstemperatur ist eine größere Tiefe der Nut empfehlenswert, um eine optimale Dichtung zu erreichen.

Um eine besonders große Tiefe der Nut und damit eine verbesserte Dichtung zu erzielen, kann vorgesehen werden, dass der Funktionsabschnitt eine konvexe Form aufweist, wobei die Nut bevorzugt im Apex der konvexen Form liegt. Die konvexe Form ermöglicht, dass der Durchmesser des Funktionsabschnitts im Bereich der Nut erhöht wird, wodurch die Seitenwände der Nut in radialer Richtung länger ausgeführt werden können, um eine tiefere Nut zu bilden.

Überraschenderweise hat sich herausgestellt, dass es für die Dichtung vorteilhaft ist, wenn der Funktionsabschnitt einen unstetigen Übergang zur Nut aufweist. Zwar würde man intuitiv annehmen, dass sich der Kunststoff des Ventilfußes beim Umspritzen schlechter um einen unstetigen Übergang herum formt und dadurch zu undichten Stellen neigt, jedoch traten in praktischen Versuchen keine undichten Stellen an den unstetigen Übergängen auf und die Dichtung wurde durch die unstetigen Übergänge sogar erhöht, da sich die Dichtlippe aufgrund der unstetigen Übergänge schwerer aus der Nut herausbewegen kann.

Aus demselben Grund ist auch bevorzugt, wenn die Seitenwände der Nut unstetig in einen im Wesentlichen zylindrischen Abschnitt der Nut übergehen.

Weiters wurden im Stand der Technik Klemmschellen eingesetzt, um eine Verdrehsicherung des Ventilfußes um den Ventilschaft zu erzielten. Es hat sich herausgestellt, dass auch diese Funktion durch eine geeignete Konstruktion des Ventilschaftes erzielt werden kann. Konkret kann der Funktionsabschnitt eine Rändelung aufweisen, bevorzugt eine Rändelung nach DIN 82-RGE, um die Verdrehsicherung umzusetzen. Es versteht sich, dass der Kunststoff des Ventilfußes nach dem Umspritzen eine zur Rändelung gegengleiche Oberflächenbeschaffenheit aufweisen wird, wodurch ein Formschluss und damit die Verdrehsicherung erzielt wird.

Der Ventilschaft besteht bevorzugt aus Metall, besonders bevorzugt Aluminium.

Weiters wird bevorzugt, wenn die Innenausnehmung am zweiten Ende eine bevorzugt konische Aufweitung für einen Dorn aufweist. Der Dorn kann in diese konische Aufweitung und in der Folge in die Innenausnehmung des Ventilschafts eingeführt werden, wonach der Ventilschaft mit dem Kunststoff umspritzt werden kann. Die konische Aufweitung dient somit dazu, das Herstellungsverfahren für das Zwischenprodukt zu vereinfachen.

In einem weiteren Aspekt schafft die Erfindung ein Zwischenprodukt, umfassend einen Ventilfuß aus Kunststoff, der den Funktionsabschnitt und den Teller des Ventilschafts umgreift, wobei eine ringförmige Dichtlippe des Ventilfußes in der Nut des Ventilschafts vorliegt. An jenen Stellen, an denen der Ventilfuß den Ventilschaft umgreift, liegt dieser bevorzugt vollständig flächig auf diesem an, um die dichte Verbindung zu erzielen.

Bevorzugt besteht der Ventilfuß aus TPU (thermoplastisches Polyurethan) oder PA (Polyamid), wobei aber auch andere Materialien für den Ventilfuß eingesetzt werden können.

Der Ventilfuß weist sodann eine Innenöffnung für den Ventilschaft auf, wobei sich die Dichtlippe ringförmig im Inneren der Innenöffnung erstreckt, d.h. ringförmig in die Innenöffnung hinein steht.

Besonders bevorzugt weist der Ventilfuß einen im Wesentlichen zylindrischen Abschnitt und einen im Wesentlichen konusförmigen Abschnitt auf. Der im Wesentlichen zylindrische Abschnitt dient als Dichtabschnitt und der im Wesentlichen konusförmige Abschnitt dient als Verbindungsstelle zum aufblasbaren Hohlkörper.

In einem weiteren Aspekt betrifft die Erfindung einen aufblasbaren Hohlkörper, umfassend eine Kunststoffmembran und das genannte Zwischenprodukt, wobei sich der Ventilfuß in einer Ausnehmung der Kunststoffmembran befindet und bevorzugt in der Ausnehmung eingeklebt oder eingeschweißt ist. Besonders bevorzugt ist der aufblasbare Hohlkörper ein Fahrradschlauch.

Die Erfindung betrifft weiters ein Verfahren zum Herstellen des genannten Zwischenprodukts, umfassend die Schritte:
- Bereitstellen des Ventilschafts;
- Umspritzen des Funktionsabschnitts und des Tellers mit Kunststoff, um den Ventilfuß zu bilden,
wobei beim Umspritzen Kunststoff in die Nut des Ventilschafts fließt, um die Dichtlippe zu bilden.

Durch das Umspritzen ist sichergestellt, dass der Kunststoff in die Nut einfließt und dadurch die Dichtlippe zur Dichtung des Ventilfußes am Ventilschaft ermöglicht.

Das Umspritzen kann beispielsweise dadurch umgesetzt werden, indem der Ventilschaft während des Umspritzens auf zwei Dornen gelagert ist, wobei ein erster Dorn von der Seite des Körpers und ein zweiter Dorn von der Seite des Tellers aus in die Innenausnehmung des Ventilschafts eingeführt ist. In diesem Zustand kann ein Hohlkörper um den Ventilschaft herum angeordnet sein, der die Form des Ventilfußes vorgibt. In diesen Hohlkörper kann der Kunststoff eingespritzt werden, um den Ventilfuß zu bilden. Es versteht sich jedoch, dass auch andere Verfahren eingesetzt werden können, um den Ventilfuß zu bilden.

Im Folgenden werden bevorzugte und nicht einschränkende Ausführungsformen durch Verweis auf die angehängten Zeichnungen erläutert.
Figur 1 zeigt einen erfindungsgemäßen Ventilschaft in einer Seitenansicht.
Figur 2 zeigt den Ventilschaft von Figur 1 in einer Schnittansicht.
Figur 3 zeigt einen weiteren erfindungsgemäßen Ventilschaft in einer Seitenansicht.
Figur 4 zeigt ein Zwischenprodukt bestehend aus deinem Ventilschaft mit darauf vorgesehenem Ventilfuß in einer Schnittansicht.
Figur 5 zeigt ein erstes Zwischenprodukt in einer Seitenansicht.
Figur 6 zeigt ein zweites Zwischenprodukt in einer Seitenansicht, wobei Figur 4 die Schnittansicht entlang der Ebene A-A ist.
Figur 7 zeigt eine Ansicht des Zwischenprodukts gemäß Figur 6 von unten.

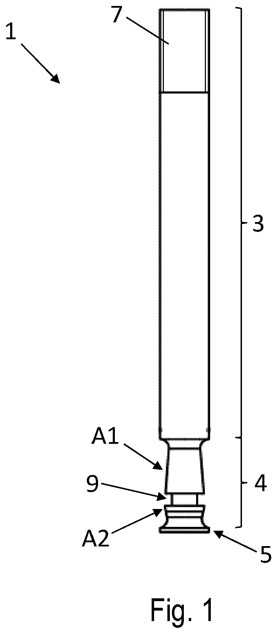

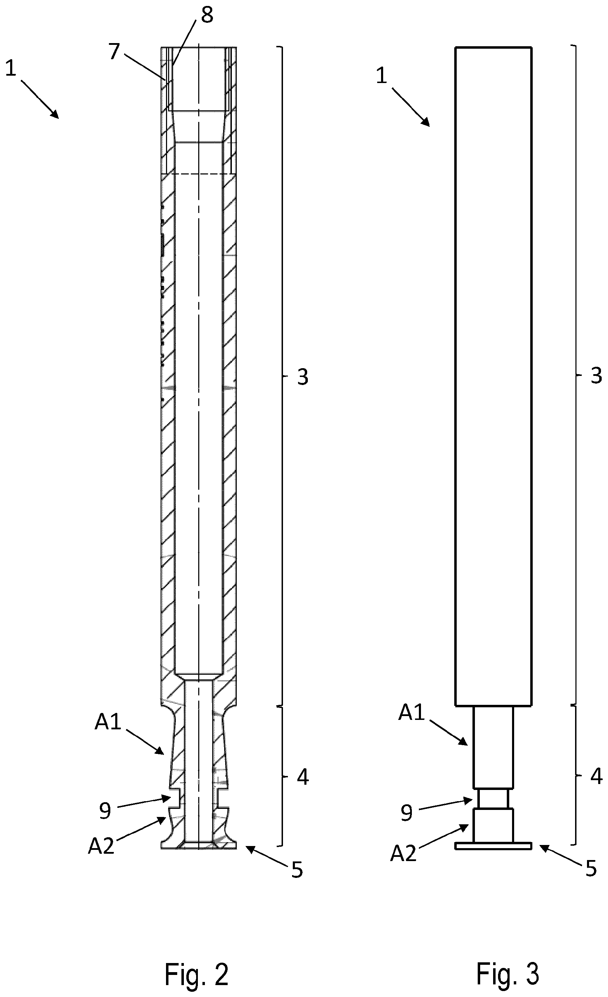

Die Figuren 1 und 2 zeigen einen Ventilschaft 1 für einen Fahrradschlauch. Alternativ kann der Ventilschaft 1 auch für andere aufblasbare Hohlkörper eingesetzt werden, wie z.B. andere Arten von fluidführenden Schläuchen, Luftmatratzen oder dergleichen.

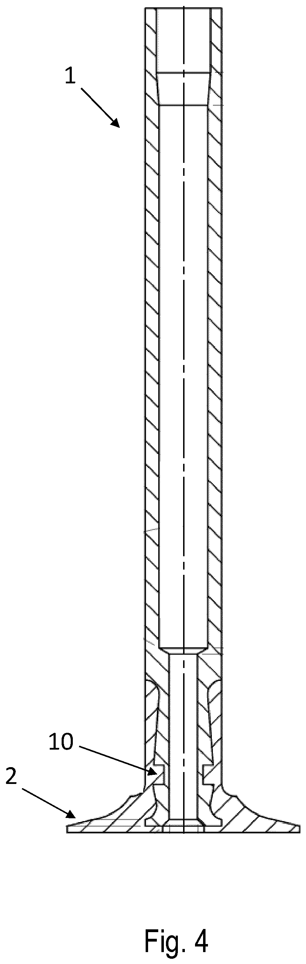

Der gezeigte Ventilschaft 1 wird in der Regel nicht unmittelbar mit dem aufblasbaren Hohlkörper verbunden, sondern ein Abschnitt des Ventilschafts 1 wird mit Kunststoff umspritzt, um einen sogenannten Ventilfuß 2 zu bilden, der aus den Figuren 4 bis 7 ersichtlich ist. Beim Umspritzen des Ventilschafts 1 verbindet sich der Kunststoff jedoch nicht mit dem Material des Ventilschafts 1, sodass die Dichtheit zwischen dem Ventilschaft 1 und dem Ventilfuß 2 allein durch die formschlüssige Verbindung zwischen Ventilschaft 1 und dem Ventilfuß 2 erreicht werden muss. Um dies zu erzielen, wird der Ventilschaft 1 wie im Folgenden beschrieben ausgeführt.

Der Ventilschaft 1 ist einstückig geformt und besteht in der Regel aus Metall, bevorzugt Aluminium, wobei auch andere Metalle eingesetzt werden können. Der Ventilschaft 1 setzt sich aus einem im Wesentlichen zylindrischen Körper 3, einem Funktionsabschnitt 4 und einem Teller 5 zusammen. Der Funktionsabschnitt 4 befindet sich zwischen dem zylindrischen Körper 3 und dem Teller 5 und schließt unmittelbar an diese an.

Aus Figur 2 ist ersichtlich, dass eine Innenausnehmung 6, z.B. eine Bohrung, den Ventilschaft 1 und damit auch den Körper 3, den Funktionsabschnitt 4 und den Teller 5 durchsetzt. Konkret verläuft die Innenausnehmung 6 von einem ersten Ende des Ventilschafts 1 bis zu einem zweiten Ende des Ventilschafts 1, sodass ein Fluid wie Luft den Ventilschaft 1 durchsetzen kann. Der Körper 3 grenzt am ersten Ende des Ventilschafts 1 an und der Teller 5 grenzt am zweiten Ende des Ventilschafts 1 an. Es ist hervorzuheben, dass die Innenausnehmung 6 keinen konstanten Innendurchmesser haben muss, sondern wie dargestellt im Bereich des Körpers 3 einen größeren Durchmesser aufweisen kann als im Bereich des Funktionsabschnitts 4, da der Funktionsabschnitt 4 wie unten erläutert einen geringeren Durchmesser als der Körper 3 aufweist.

Wie bereits erwähnt ist der Körper 3 im Wesentlichen zylindrisch ausgeführt, wobei sich jedoch ein Außengewinde 7 am Körper 3 befinden kann, beispielsweise über die gesamte Länge des Körpers 3 oder auch nur an einem Abschnitt, der am ersten Ende angrenzt. Die genannte Innenausnehmung 6 kann am ersten Ende auch über ein Innengewinde 8 verfügen. Das Außengewinde 7 und/oder das Innengewinde 8 dienen dazu, einen Ventileinsatz am Ventilschaft 1 anzubringen. Der Außendurchmesser des Körpers 3 könnte z.B. 4 mm bis 8 mm betragen. Im dargestellten Beispiel beträgt der Außendurchmesser 5,9 mm.

Der Teller 5 ist im Wesentlichen zylindrisch ausgeführt und weist in der Regel eine Länge auf, die wesentlich kürzer ist als die Länge des Körpers 3, z.B. zumindest um einen Faktor 10 kürzer. Im Allgemeinen kann der Teller 5 beispielsweise eine Länge von 0,1 mm bis 2 mm aufweisen, wobei auch andere Längen eingesetzt werden könnten. Im dargestellten Beispiel hat der Teller 5 eine Länge von 0,5 mm. Der Teller 5 hat bevorzugt denselben Außendurchmesser wie der Körper 3. Es sei weiters angemerkt, dass der Teller 5 nicht zylindrisch sein muss und z.B. konisch sein kann, in welchem Fall die genannten Durchmesser den Maximaldurchmesser des Tellers 5 angeben. Es sei angemerkt, dass hierin die Länge hierin parallel zur Zentralachse des Ventilschafts 1 gemessen wird, sofern nichts anderes angegeben ist.

Der Funktionsabschnitt 4 weist in der Regel eine Länge von 5 mm bis 20 mm auf. Im dargestellten Beispiel weist der Funktionsabschnitt eine Länge von 10,8 mm auf. Der Funktionsabschnitt 4 weist an jeder Stelle einen geringeren Durchmesser als der Körper 3 und der Teller 5 auf, d.h. der Funktionsabschnitt hat einen Maximaldurchmesser, der kleiner ist als der Maximaldurchmesser des Tellers 5 und als der Maximaldurchmesser des Körpers 3.

Weiters weist der Funktionsabschnitt 4 eine Nut 9 auf, die sich zwischen einem ersten Abschnitt A1 und einem zweiten Abschnitt A2 des Funktionsabschnitts 4 befindet. Sowohl die Nut 9 als auch der erste Abschnitt A1 und der zweite Abschnitt A2 haben eine Länge größer als 0 mm.

Innerhalb der Nut 9 hat der Funktionsabschnitt 4 seinen geringsten Durchmesser. Der erste Abschnitt A1 und der zweite Abschnitt A1 haben in der Regel an allen Stellen einen größeren Durchmesser als die Nut 9 und einen geringeren Durchmesser als der Körper 3 und der Teller 5.

Die Tiefe der Nut 9 kann als Differenz des Radius des Funktionsabschnitts 4 (d.h. des ersten Abschnitts A1 und/oder des zweiten Abschnitts A2) unmittelbar neben der Nut 9 und des Minimalradius der Nut 9 gemessen werden. Bevorzugt weist die Nut 9 eine Tiefe von zumindest 0,2 mm, von zumindest 0,5 mm oder von zumindest 0,8 mm auf. In der Regel wird die Tiefe der Nut 9 so groß wie möglich gewählt, d.h. die Dicke des Wandabschnitts zwischen der Innenausnehmung 6 und der Nut 9 wird so klein wie möglich gewählt, ohne die strukturelle Integrität des Ventilschafts 1 zu beeinträchtigen. Diese Dicke des Wandabschnitts kann z.B. als 0,2 mm bis 0,6 mm gewählt werden. Im dargestellten Beispiel beträgt die Dicke des Wandabschnitts 0,4 mm.

Die Länge der Nut 9 kann beispielsweise zwischen 1 mm und 4 mm betragen. Im dargestellten Beispiel beträgt die Länge der Nut 9 1,5 mm. In Relation zum Funktionsabschnitt 4 betrachtet kann die Länge der Nut 9 beispielsweise zwischen 10% und 40% der Länge des Funktionsabschnitts 4 betragen.

Die Nut 9 ist hierin bevorzugt eine Struktur mit im Wesentlichen radial verlaufenden Seitenwänden und einer sich zwischen den Seitenwänden erstreckenden, im Wesentlichen zylindrisch verlaufenden Fläche. Die Länge der Nut 9 ist somit der Abstand der Seitenflächen. Die Seitenwände könnten jedoch auch eine Neigung gegenüber der radialen Richtung aufweisen und die genannte Fläche könnte auch eine andere Form haben, z.B. eine konische Form.

An dieser Stelle sei festgehalten, dass der Funktionsabschnitt 4 auch mehr als eine Nut 9 aufweisen kann, z.B. genau zwei Nute 9, genau drei Nute 9 oder mehr als drei Nute 9, wenn diese entsprechend kurz gewählt werden. Bevorzugt umfasst der Funktionsabschnitt 4 jedoch genau eine Nut 9.

Der Ventilschaft 1 kann auf den Abschnitten A1, A2 außerhalb der Nut 9 eine Rändelung aufweisen, z.B. eine Rändelung nach DIN 82-RGE. Besonders bevorzugt verläuft die Rändelung nicht oder nicht nur in Umfangsrichtung. Die Rändelung hat den Zweck, dass eine Verdrehsicherung für den Ventilfuß 2 erzielt wird.

Die Nut 9 wird wie in den Figuren 1 und 2 gezeigt bevorzugt mit unstetigen Übergängen ausgeführt, um die Dichtheit des Ventilfußes 2 am Ventilschafts 1 zu maximieren. Konkret kann der Funktionsabschnitt 4 einen unstetigen Übergang zu einer Seitenfläche der Nut 9 aufweisen und/oder die Seitenwände der Nut 9 können unstetig in eine zwischen den Seitenflächen der Nut 9 verlaufende Fläche übergehen.

Wie in Figur 1 dargestellt weist der Ventilschaft 1 zudem einen unstetigen Übergang vom Körper 3 zu einer Seitenwand des Funktionsabschnitts 4 und vom Teller 5 zu einer Seitenwand des Funktionsabschnitts 4 auf. Der Übergang zwischen den Seitenwänden des Funktionsabschnitts zu den Abschnitten A1, A2 ist jedoch stetig ausgeführt, hier mit einer abgerundeten Fase.

In Versuchen hat sich herausgestellt, dass unstetige Übergänge überraschenderweise förderlich sind, um die Dichtheit des Ventilfußes 2 am Ventilschaft zu maximieren.

In den Figuren 1 und 2 ist weiters dargestellt, dass der Funktionsabschnitt 4 eine im Wesentlichen konvexe Form aufweisen kann, die durch einen ansteigenden ersten Abschnitt A1 und durch einen abfallenden zweiten Abschnitt A2 gekennzeichnet ist (jeweils gesehen in Richtung vom Körper 3 zum Teller 5). Zwischen diesen Abschnitten A1, A2, oder allgemeiner im Apex der konvexen Form, sitzt bevorzugt die Nut 9. Dies ist vorteilhaft, um erstens einen verbesserten Sitz des Ventilfußes 2 zu erzielen und zweitens, um eine größere Tiefe der Nut 9 zu erzielen.

Figur 3 zeigt eine Alternative des Ventilschaftes 1, bei der zwei (voneinander unabhängige) Modifikationen gegenüber der Ausführungsform der Figuren 1 und 2 vorgenommen wurden. Erstens sind nur unstetige Übergänge zwischen den genannten Abschnitten vorgesehen. Alternativ könnten alle Übergänge auch mit abgerundeten oder abgeschrägten Fasen versehen sein. Zweitens sind die Abschnitte A1, A2 im Wesentlichen zylindrisch ausgeführt.

Im direkten Vergleich zwischen den Figuren 2 und 3 ist ersichtlich, dass durch die zylindrischen Abschnitte A1, A2 nur eine geringere Tiefe der Nut 9 erreichbar ist.

Figur 4 zeigt den bereits erwähnten Ventilfuß 2, der einen Abschnitt des Ventilschafts 1 umgreift. Diese Kombination wird hierin als Zwischenprodukt bezeichnet. Konkret umgreift der Ventilfuß 2 den Funktionsabschnitt 4 und den Teller 5 und es ist ersichtlich, dass der Teller 5 einen Ausreißschutz für den Ventilfuß 2 bildet. Eine dem ersten Ende des Ventilschafts 1 abgewandte Seite des Ventilfußes 2 ist optional vom zweiten Ende des Ventilschafts 1 beabstandet, sodass die Rückseite des Ventilschafts 1 bzw. des Tellers 5 vom Ventilfuß 2 abgedeckt ist. Auch der Ventilfuß 2 weist eine Innenausnehmung auf, die in Verlängerung der Innenausnehmung 6 des Ventilschafts 1 vorgesehen ist.

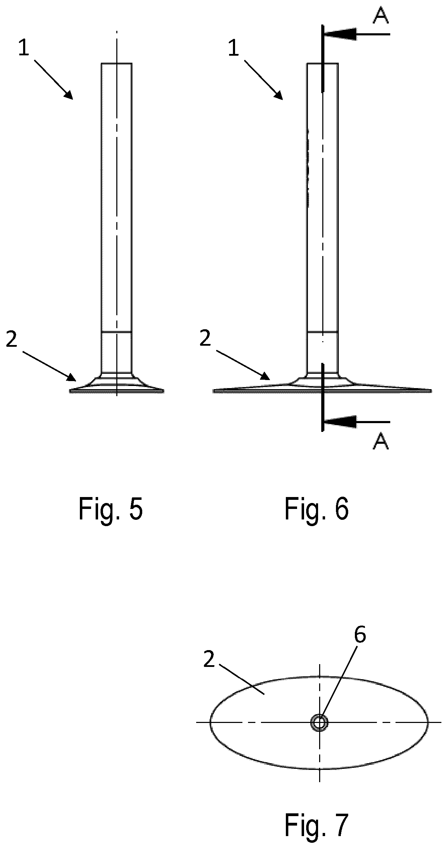

Der Ventilfuß 2 weist in den dargestellten Varianten einen im Wesentlichen zylindrischen Abschnitt auf, welcher denselben Außendurchmesser wie der Körper 3 des Ventilschafts 1 hat. Weiters weist der Ventilfuß 2 einen im Wesentlichen konusförmigen Endabschnitt auf, der einen im Wesentlichen kreisförmigen Querschnitt aufweisen kann, wie in Figur 5 angedeutet ist, oder einen im Wesentlichen elliptischen Querschnitt aufweisen kann, wie in den Figuren 4, 6 und 7 gezeigt ist. Andere Formen des Ventilfußes 2 sind möglich.

Aus Figur 4 ist insbesondere ersichtlich, dass der Ventilfuß 2 eine einstückig an diesem ausgeführt Dichtlippe 10 aufweist, die in die Nut 9 eingreift. Dadurch wird eine besonders dichte formschlüssige Verbindung des Ventilfußes 2 auf dem Ventilschaft 1 erzielt.

Um das Zwischenprodukt herzustellen, können der Funktionsabschnitt 4 und der Teller 5 mit Kunststoff umspritzt werden, sodass der Ventilfuß 2 einstückig und unlösbar um den Ventilschaft 1 herum hergestellt wird. Insbesondere fließt der Kunststoff bei diesem Herstellungsverfahren besonders gut in die Nut 9 hinein, um die Dichtlippe 10 zu bilden, wodurch die dichte Verbindung erzielt wird. Wenn der Funktionsabschnitt 4 wie oben erwähnt eine Rändelung aufweist, wird der Kunststoff auch passgenau auf der Rändelung zu liegen kommen, wodurch die Verdrehsicherung erzielt wird.

Der Ventilfuß 2 kann insbesondere aus TPU oder PA bestehen, da sich dieses Material für die Verbindung zwischen dem Ventilschaft 1 und dem aufblasbaren Hohlkörper besonders eignet. Es könnte jedoch auch ein anderes Material für den Ventilfuß 2 eingesetzt werden.

Um das Zwischenprodukt mit dem aufblasbaren Hohlkörper zu verbinden, kann der Ventilfuß in den Hohlkörper eingeklebt oder eingeschweißt werden. Weitere Verbindungstechniken sind möglich.

## Patentansprüche

1. Ventilschaft (1) für einen aufblasbaren Hohlkörper, insbesondere einen fluidführenden Schlauch wie einen Fahrradschlauch,
wobei der Ventilschaft (1) eine durchgehende Innenausnehmung (6) aufweist, die von einem ersten Ende des Ventilschafts (1) bis zu einem zweiten Ende des Ventilschafts (1) verläuft, wobei der Ventilschaft (1) einen im Wesentlichen zylindrischen Körper (3) umfasst, der am ersten Ende eine endseitige Ventilanbindung, insbesondere ein Gewinde, aufweist, **dadurch gekennzeichnet, dass**
der Ventilschaft (1) am zweiten Ende einen Teller (5) aufweist,
wobei sich ein Funktionsabschnitt (4) zwischen dem Ventilkörper (3) und dem Teller (5) befindet, wobei der Funktionsabschnitt (4) an jeder Stelle des Funktionsabschnitts (4) einen geringeren Durchmesser als der Teller (5) und der Ventilkörper (3) aufweist,
wobei der Funktionsabschnitt (4) eine um den Umfang des Funktionsabschnitts (4) verlaufende Nut (9) aufweist.

2. Ventilschaft (1) nach Anspruch 1, wobei die Nut (9) eine Tiefe von zumindest 0,2 mm, bevorzugt von zumindest 0,5 mm und besonders bevorzugt von zumindest 0,8 mm aufweist.

3. Ventilschaft (1) nach Anspruch 1 oder 2, wobei der Funktionsabschnitt (4) eine konvexe Form aufweist, und wobei die Nut (9) bevorzugt im Apex der konvexen Form liegt.

4. Ventilschaft (1) nach einem der vorherstehenden Ansprüche, wobei der Funktionsabschnitt (4) einen unstetigen Übergang zur Nut (9) aufweist.

5. Ventilschaft (1) nach einem der vorherstehenden Ansprüche, wobei Seitenwände der Nut (9) unstetig in einen im Wesentlichen zylindrischen Abschnitt der Nut (9) übergehen.

6. Ventilschaft (1) nach einem der vorherstehenden Ansprüche, wobei der Funktionsabschnitt (4) eine Rändelung aufweist, bevorzugt eine Rändelung nach DIN 82-RGE.

7. Ventilschaft (1) nach einem der vorherstehenden Ansprüche, wobei die Innenausnehmung (6) am zweiten Ende eine bevorzugt konische Aufweitung für einen Dorn aufweist.

8. Ventilschaft (1) nach einem der vorherstehenden Ansprüche, wobei der Ventilschaft (1) aus Metall, bevorzugt Aluminium, besteht.

9. Zwischenprodukt, umfassend einen Ventilfuß (2) aus Kunststoff und einen Ventilschaft (1) nach einem der vorherstehenden Ansprüche, wobei der Ventilfuß (2) den Funktionsabschnitt (4) und den Teller (5) des Ventilschafts (1) umgreift, wobei eine ringförmige Dichtlippe (10) des Ventilfußes (2) in der Nut (9) vorliegt.

10. Zwischenprodukt nach Anspruch 9, wobei der Ventilfuß (2) aus TPU oder PA besteht.

11. Zwischenprodukt nach Anspruch 9 oder 10, wobei der Ventilfuß (2) einen im Wesentlichen zylindrischen Abschnitt und einen im Wesentlichen konusförmigen Abschnitt aufweist.

12. Aufblasbarer Hohlkörper, umfassend eine Kunststoffmembran und ein Zwischenprodukt nach einem der Ansprüche 9 bis 11, wobei sich der Ventilfuß (2) in einer Ausnehmung der Kunststoffmembran befindet und bevorzugt in der Ausnehmung eingeklebt oder eingeschweißt ist.

13. Aufblasbarer Hohlkörper nach Anspruch 12, wobei der aufblasbare Hohlkörper ein Fahrradschlauch ist.

14. Verfahren zum Herstellen eines Zwischenprodukts nach einem der Ansprüche 9 bis 11, umfassend die Schritte:
- Bereitstellen des Ventilschafts (1);
- Umspritzen des Funktionsabschnitts (4) und des Tellers (5) mit Kunststoff, um den Ventilfuß (2) zu bilden,
wobei beim Umspritzen Kunststoff in die Nut (9) des Ventilschafts (1) fließt, um die Dichtlippe (10) zu bilden,

15. Verfahren nach Anspruch 14, wobei der Ventilschaft (1) während des Umspritzens auf Dornen gelagert ist, die von der Seite des Tellers (5) und von der Seite des Körpers aus in die Innenausnehmung (6) eingeführt sind, wobei sich in diesem Zustand ein Hohlkörper um den Ventilschaft (1) befindet, der die Form des Ventilfußes (2) vorgibt, wonach Kunststoff in den Hohlkörper eingespritzt wird, um den Ventilfuß (2) zu bilden.
